(19) Europäisches Patentamt
European Patent Office
Office européen des brevets

(11) **EP 3 859 190 B1**

(12) **EUROPEAN PATENT SPECIFICATION**

(45) Date of publication and mention of the grant of the patent:
**28.02.2024 Bulletin 2024/09**

(21) Application number: **19867925.0**

(22) Date of filing: **25.09.2019**

(51) International Patent Classification (IPC):
**F16H 25/06** (2006.01)

(52) Cooperative Patent Classification (CPC):
**F16H 25/06;** F16H 2025/063; F16H 2025/066

(86) International application number:
**PCT/JP2019/037606**

(87) International publication number:
**WO 2020/067160 (02.04.2020 Gazette 2020/14)**

(54) **SPEED REDUCER**

DREHZAHLMINDERER

ENGRENAGE RÉDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2018 JP 2018183654**
**28.09.2018 JP 2018183660**

(43) Date of publication of application:
**04.08.2021 Bulletin 2021/31**

(73) Proprietor: **NTN Corporation**
**Osaka-shi, Osaka 550-0003 (JP)**

(72) Inventor: **IGI, Taisuke**
**Iwata-shi Shizuoka 438-8510 (JP)**

(74) Representative: **Grünecker Patent- und Rechtsanwälte**
**PartG mbB**
**Leopoldstraße 4**
**80802 München (DE)**

(56) References cited:
| | |
|---|---|
| EP-A1- 0 196 650 | JP-A- S 604 663 |
| JP-A- H02 503 108 | JP-A- S59 133 863 |
| JP-A- 2018 021 602 | JP-U- H 053 713 |
| JP-U- S4 738 279 | US-B2- 8 162 790 |

**Description**

TECHNICAL FIELD

The present invention relates to a speed reducer.

BACKGROUND ART

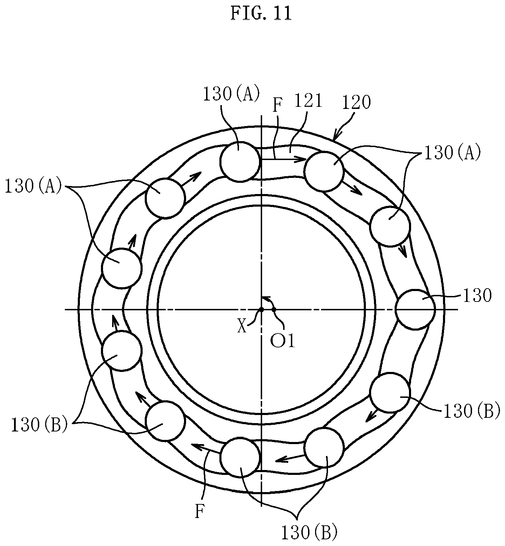

For example, Patent Literature 1 discloses, as shown in FIG. 10, a speed reducer in which an input plate 110 having a ball engaging groove 111 and an output plate 120 having a ball engaging groove 121 are disposed so as to face each other in an axial direction. A rotational torque is transmitted from the input plate 110 to the output plate 120 via balls 130 engaging with the ball engaging grooves 111 and 121.
Specifically, this speed reducer includes the input plate 110 and the output plate 120 rotatably provided around a common rotation center X, a plurality of the balls 130 interposed between the input plate 110 and the output plate 120, and a cage 140 fixed to a housing 160. The first ball engaging groove 111 provided in the input plate 110 is formed in a circular shape, and the second ball engaging groove 121 provided in the output plate 120 is formed in a corrugated shape (see FIG. 11). The input plate 110 is attached to an outer circumference of an input shaft 170 via an eccentric cam 180, and thus a curvature center O1 of the circular first ball engaging groove 111 is eccentric from the rotation center X by an eccentric amount "a". In response to a rotation of the input shaft 170, the input plate 110 revolves around the rotation center X with a whirl radius "a". Along with this revolution, the balls 130 engaged with the first ball engaging groove 111 reciprocate in a radial direction in pockets 141 provided in the cage 140. A component force in a rotation direction of a contact force between the balls 130 and the second ball engaging groove 121 having a corrugated shape causes the output plate 120 to rotate.
For example, when a center line O1 of the input plate 110 revolves in a direction of an arrow from a position shown in FIG. 11 as the input shaft 170 rotates, a ball 130 (A) located above the rotation center X is pressed against an outer diameter side part of the second ball engaging groove 121 having a corrugated shape, and a ball 130 (B) located below the rotation center X is pressed against an inner diameter side part of the second ball engaging groove 121 having a corrugated shape. At this time, the output plate 120 is rotated by a component force F (see an arrow) in the rotation direction of the contact force applied from the balls 130 to the second ball engaging groove 121. As described above, in the above speed reducer, among the plurality of balls 130, not only the ball 130 (A) above the rotation center X but also the ball 130 (B) below the rotation center X contributes to torque transmission, thereby increasing a load capacity and reducing vibration.

CITATIONS LIST

PATENT LITERATURE

Document US 8 162 790 B2 also shows a speed reducer. Patent Literature 1: JP 2018-021602 A

SUMMARY OF INVENTION

TECHNICAL PROBLEMS

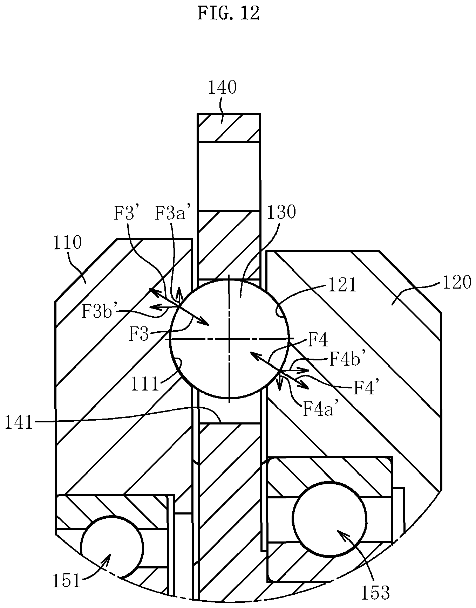

However, in the above speed reducer, as shown in FIG. 12, the balls 130 and the ball engaging grooves 111 and 121 contact each other at an inclined angle with respect to an axial direction. Thus, contact forces F3' and F4' received by the input plate 110 and the output plate 120 from the balls 130 (reaction forces of contact forces F3 and F4 applied to the balls 130) have radial direction components F3a' and F4a' and axial direction components F3b'and F4b', respectively. It is therefore necessary to use bearings 151 and 152 that support the input plate 110 and bearings 153 and 154 that support the output plate 120, which can receive loads in both radial and axial directions. As such bearings, deep groove ball bearings and angular ball bearings are generally used, but these bearings are less tolerable in the axial direction than in a radial direction. Thus, bearings that can withstand loads in both radial and axial directions are to be selected, leading to larger bearings and a larger speed reducer as a whole. Further, when the bearings are used in an environment where loads in both radial and axial directions act, a torque loss inside the bearings increases, resulting in a decrease in transmission efficiency of the speed reducer as a whole.
From the above circumstances, an object of the present invention is to miniaturize a speed reducer as a whole that transmits a rotational torque in an axial direction via a rolling element and improve transmission efficiency of the rotational torque.

SOLUTIONS TO PROBLEMS

In order to solve the above problems, the present invention provides a speed reducer and a rotation transmission device according to the terms of the independent claims. Preferred embodiments are laid down in the dependent claims.

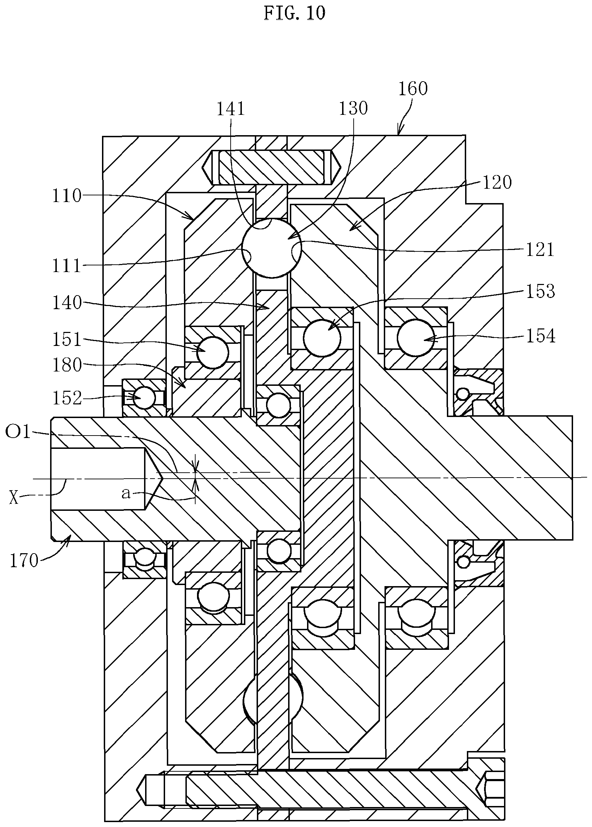

The second rolling element engaging groove, disposed in the fixed member, allows a contact force generated between the rolling elements and the second rolling element engaging groove to be supported by the fixed member, thereby eliminating the need for a bearing for supporting this contact force. Further, in the above speed reducer, the first rolling element engaging groove engages with the rolling elements while rotating eccentrically with a rotation of the input rotating part, and thus the rolling elements move along the second rolling element engaging groove having a corrugated shape, disposed in the fixed member. The rolling elements rotate the output rotating part by engaging with the pockets provided in the output rotating part in the circumferential direction. At this time, only the contact force in the circumferential direction (rotational direction) is generated between the rolling elements and peripheral walls of the pockets, and thus no load in an axial direction is applied to the output rotating part provided with the pockets. As a result, a bearing that supports the output rotating part only has to support a radial load. A load applied to the bearing is therefore reduced, the bearing can be reduced in size as compared with the bearings 153 and 154 supporting the output rotating part (output plate 120) in the conventional speed reducer shown in FIG. 10, and a torque loss inside the bearing can be reduced.

Balls or rollers can be used as the rolling elements engaging with the rolling element engaging grooves and transmitting torque in the axial direction. In particular, by using a roller having a cylindrical outer peripheral surface (for example, a cylindrical roller) as each rolling element, almost no load in the axial direction is generated between the outer peripheral surface of the roller and a side wall of each rolling element engaging groove. Thus, the bearings supporting the input rotating part and the output rotating part that receive the contact force from each rolling element engaging groove only have to support the radial load, and can be miniaturized while maintaining durability. Further, because the load applied to the bearings are limited to be in the radial direction, the torque loss inside the bearings can be reduced.

When the rollers are used as the rolling elements, a friction reducing member (for example, a needle bearing or a slide bearing) is preferably provided on at least one contact part where an outer peripheral surface of the roller is in contact with the first rolling element engaging groove, the second rolling element engaging groove, or the pockets. In this way, the rollers contact each member (the input rotating part, the output rotating part, or the fixed member) via the friction reducing member. This can significantly reduce a friction loss of each contact part as compared with a case where the rollers directly contact each member, thereby further improving torque transmission efficiency.

In the power transmission device of the present invention, the pair of second members having the second rolling element engaging groove, the pair of third members having the pockets, and the plurality of balls are disposed symmetrically in the axial direction around the first member in which the first rolling element engaging groove is formed on each side surface of both sides in the axial direction. As a result, the contact forces with the balls are applied to the first member from both sides in the axial direction, and thus axial components of the contact forces are canceled out. Consequently, the load in the axial direction is not applied to the first member, which can reduce the load applied to a support part such as the bearing supporting the first member and miniaturize the support part.

When the power transmission device has a bearing that rotatably supports the first member, the bearing that rotatably supports the first member only has to support the radial load, and can be miniaturized while maintaining the durability. Further, limiting a direction of the load applied to the bearing can reduce the torque loss inside the bearing.

In the power transmission device, for example, the first member may be provided in the input rotating part, the pair of third members may be provided in the output rotating part, and the pair of second members may be used as fixed members. The second member, provided as the fixed member in this way, allows the contact force generated between the balls and the second rolling element engaging groove to be supported by the fixed member, thereby eliminating the need for a large bearing for supporting this contact force. Further, by providing the third member in the output rotating part, only a contact force in the circumferential direction (rotational direction) is generated between the balls and the pockets of the output rotating part (third member). This can reduce the load applied to the bearings supporting the third members, reduce a size of the bearings, and reduce the torque loss inside the bearing. In this case, if the pair of third members provided in the output rotating part integrally rotatable, power transmitted from the first member provided in the input rotating part to the balls on both sides in the axial direction separately can be combined and output.

In the power transmission device, because the second members and the third members are provided in pairs, there is a concern that costs will increase due to an increase in the number of parts. Making the pair of second members and the pair of third members in the identical shapes can reduce manufacturing costs of each member by sharing the parts, and suppress the cost increase due to the increase in the number of parts.

ADVANTAGEOUS EFFECTS OF INVENTION

As described above, using the member having the second rolling element engaging groove having a corrugated shape as the fixed member eliminates the need for the bearing supporting the contact force between the second rolling element engaging groove and the rolling elements. Further, by using the member having the pockets as the output rotating part, the bearing supporting the output rotating part is miniaturized to miniaturize the speed reducer as a whole, and reduce the torque loss inside the bearing to improve the torque transmission efficiency.

BRIEF DESCRIPTION OF DRAWINGS

FIG. 1 is a sectional view of a speed reducer according to a first embodiment of the present invention.
FIG. 2 is a front view of an input member as viewed from an output side (right in FIG. 1).
FIG. 3 is a front view of an output member as viewed from an input side (left in FIG. 2).
FIG. 4 is a front view of a cage.
FIG. 5 is an enlarged view of a V part in FIG. 4.
FIG. 6 is an exploded perspective view schematically showing the input member, the output member, a fixed member, and a roller.
FIG. 7 is a front view showing a contact force applied to a ball.
FIG. 8 is a sectional view of a speed reducer according to another embodiment.
FIG. 9 is a sectional view of a speed reducer according to still another embodiment.
FIG. 10 is a sectional view of a conventional speed reducer.
FIG. 11 is a front view of an output plate and a ball of the speed reducer in FIG. 10.
FIG. 12 is an enlarged view of the speed reducer in FIG. 10.
FIG. 13 is a sectional view of a speed reducer according to a second embodiment of the present invention.
FIG. 14 is a front view of an input member (first member).
FIG. 15 is a front view of a fixed member (second member).
FIG. 16 is a front view of an output member (third member).
FIG. 17 is an enlarged view of a V part in FIG. 16.
FIG. 18 is an exploded perspective view schematically showing the input member, the output member, the fixed member, and a ball.
FIG. 19 is a front view showing a contact force applied to the ball.
FIG. 20 is an enlarged view of the speed reducer in FIG. 13.

DESCRIPTION OF EMBODIMENTS

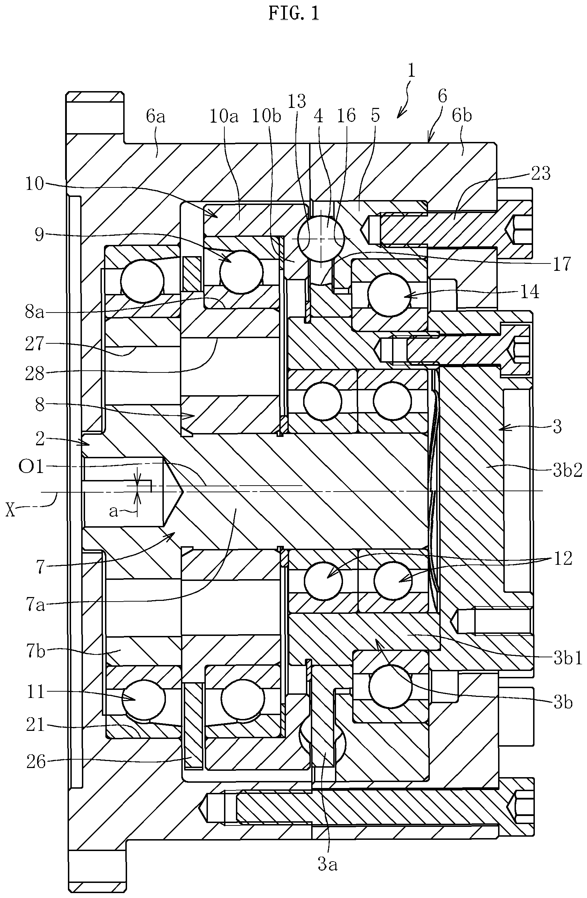

Hereinafter, a first embodiment of the present invention will be described with reference to FIGS. 1 to 9.

As shown in FIG. 1, a speed reducer 1 according to one embodiment of the present invention includes an input rotating part 2, an output rotating part 3, balls 4 as rolling elements, a fixed member 5, and a housing 6 that houses all of the above. In the illustrated example, the housing 6 is configured by a first housing member 6a provided on the input side (left in FIG. 1) and a second housing member 6b provided on the output side (right in FIG. 1). The input rotating part 2 and the output rotating part 3 are disposed coaxially and have a common rotation center X. The fixed member 5 is fixed to the housing 6.

The input rotating part 2 has an input shaft 7, an eccentric cam 8, a rolling bearing 9, and an input member 10. The input shaft 7 has a shaft part 7a and a flange part 7b provided near an input side end (left end in FIG. 1) of the shaft part 7a. The input shaft 7 is rotatable around the rotation center X with respect to the housing 6. In the present embodiment, the input shaft 7 is rotatably supported with respect to the housing 6 by a rolling bearing 11 mounted between an outer peripheral surface of the flange part 7b and an inner peripheral surface 21 of the first housing member 6a of the housing 6, and a rolling bearing 12 mounted between an outer peripheral surface of the shaft part 7a and an inner peripheral surface of the output rotating part 3. The eccentric cam 8 is fitted and fixed to the outer peripheral surface of the shaft part 7a of the input shaft 7. A center line O1 of a cylindrical outer peripheral surface 8a of the eccentric cam 8 is eccentric in a radial direction by an eccentric amount "a" with respect to the rotation center X.

The input member 10 is formed in an annular shape, and in the illustrated example, has a cylindrical part 10a and a disk part 10b extending in an inner diameter direction from an output side end of the cylindrical part 10a. The center line O1 of the cylindrical outer peripheral surface 8a of the eccentric cam 8 is also a center line of the cylindrical part 10a and the disk part 10b of the input member 10. The rolling bearing 9 is mounted between the cylindrical outer peripheral surface 8a of the eccentric cam 8 and an inner peripheral surface of the cylindrical part 10a of the input member 10. As a result, the input member 10 is relatively rotatable with respect to the eccentric cam 8.

The flange part 7b of the input shaft 7 and the eccentric cam 8 are provided with axial through holes 27 and 28 at a plurality of locations in a circumferential direction for weight reduction. Further, the input rotating part 2 is provided with a balancer 26 in order to improve a weight balance of the whirling bearing 9 and the input member 10 during rotation via the eccentric cam 8. A center of gravity of the balancer 26 is provided eccentrically with respect to the rotation center X in a direction 180 ° out of phase with an eccentric direction of the center line O1 of the input member 10. In the illustrated example, the balancer 26 is fixed to the outer peripheral surface of the eccentric cam 8 and is disposed between the bearing 9 and the bearing 11 in the axial direction.

The fixed member 5 forms an annular shape and is fixed to the second housing member 6b of the housing 6 by an appropriate means such as a bolt 23. The input member 10 and the fixed member 5 are disposed side by side in the axial direction at predetermined intervals. A first rolling element engaging groove 13 and a second rolling element engaging groove 16 are formed on axially opposing side surfaces of the input member 10 and the fixed member 5, respectively.

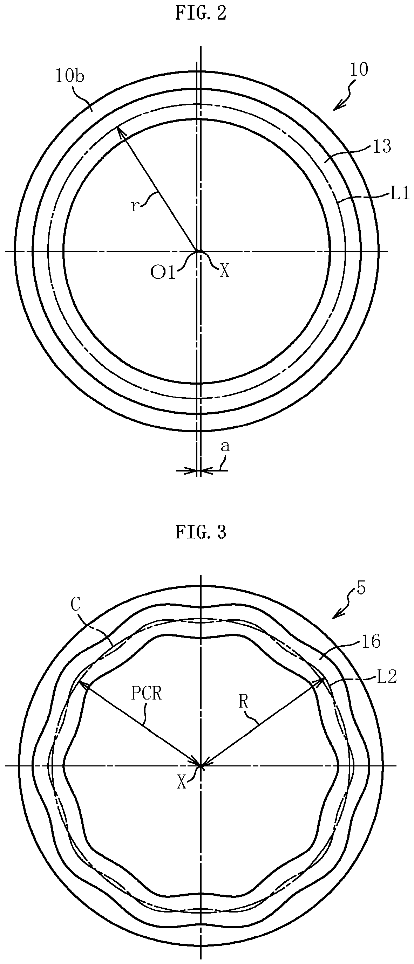

As shown in FIG. 2, a raceway center line L 1 of the first rolling element engaging groove 13 formed in the disk part 10b of the input member 10 is formed in a circle having a radius r. The curvature center of the raceway center line L 1 of the first rolling element engaging groove 13 coincides with the cylindrical outer peripheral surface 8a of the eccentric cam 8 and the center line O1 of the input member 10. That is, the curvature center of the raceway center line L1 (that is, the center line O1) is eccentric with respect to the rotation center X of the input rotating part 2 by the eccentric amount "a". By engaging with the first rolling element engaging groove 13, each ball 4 is held at a predetermined radial position while being movable in the circumferential direction (direction along the raceway center line L1). The raceway center line L 1 of the first rolling element engaging groove 13 refers to a track of a center of each ball 4 when the balls 4 are moved along the first rolling element engaging groove 13.

As shown in FIG. 3, the raceway center line L2 of the second rolling element engaging groove 16 formed in the fixed member 5 is formed in a corrugated curve alternately intersecting with a reference pitch circle C centered on the rotation center X at a constant pitch. That is, the second rolling element engaging groove 16 is formed in a corrugated curve in which a distance R from the rotation center X fluctuates with respect to a reference pitch circle radius PCR. In the present embodiment, the corrugated curve of the raceway center line L2 is provided with ten peaks whose distance R from the rotation center X is larger than the reference pitch circle radius PCR, and ten valleys whose distance R from the rotation center X is smaller than the reference pitch circle radius PCR. The raceway center line of the second rolling element engaging groove 16 refers to the track of the center of each ball 4 when the balls 4 are moved along the second rolling element engaging groove 16.

As shown in FIG. 1, the output rotating part 3 includes a disk part 3a that functions as an output member and a shaft part 3b that functions as an output shaft. In the illustrated example, the disk part 3a and the shaft part 3b are formed separately. Further, the shaft part 3b has a cylindrical part 3b1 and a lid 3b2 that closes an opening of a cylindrical part 3b 1 separately. The lid 3b2 is provided with a connecting part connecting other members to which the decelerated rotation is to be transmitted. The output rotating part 3 is rotatable around the rotation center X with respect to the housing 6. In the present embodiment, the output rotating part 3 is rotatably supported with respect to the housing 6 by a rolling bearing 14 mounted between an outer peripheral surface of the cylindrical part 3b1 of the shaft part 3b and an inner peripheral surface of the fixed member 5, and a rolling bearing 12 mounted between an inner peripheral surface of the cylindrical part 3b1 of the shaft part 3b and an outer peripheral surface of the shaft part 7a of the input shaft 7. In the illustrated example, two rolling bearings 12 are disposed side by side in the axial direction.

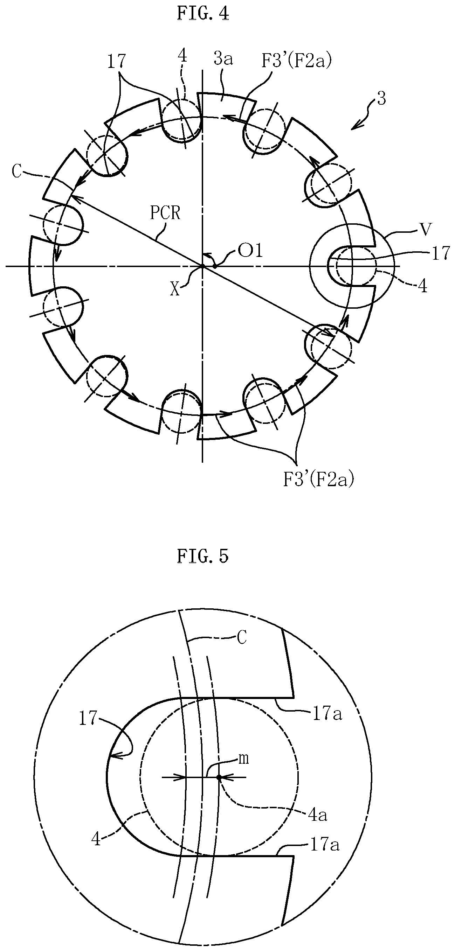

The disk part 3a of the output rotating part 3 has a plurality of pockets 17 that holds each ball 4. In the present embodiment, as shown in FIG. 4, the plurality of pockets 17 is formed by elongated holes extending radially around the rotation center X of both the rotating members 2 and 3. In the illustrated example, each of the pockets 17 is opened on an outer peripheral surface of the disk part 3a. The pockets 17 are formed at equal intervals in the circumferential direction, and one ball 4 is disposed in each pocket 17. The number of pockets 17 (that is, the number of balls 4) is eleven, which is one more than the number of peaks or valleys (ten) of the corrugated curve of the raceway center line L2. As shown in FIG. 5, each ball 4 can move within each pocket 17 within a range of a predetermined amount m in the radial direction around the reference pitch circle C. In the present embodiment, a pair of parallel flat surfaces 17a facing each other in the circumferential direction is provided on a peripheral wall of each pocket 17, and a circumferential distance between the flat surfaces 17a is substantially equal to (slightly larger than) an outer diameter of each ball 4. As a result, each ball 4 is held in a predetermined circumferential position by each pocket 17 while being movable in the radial direction.

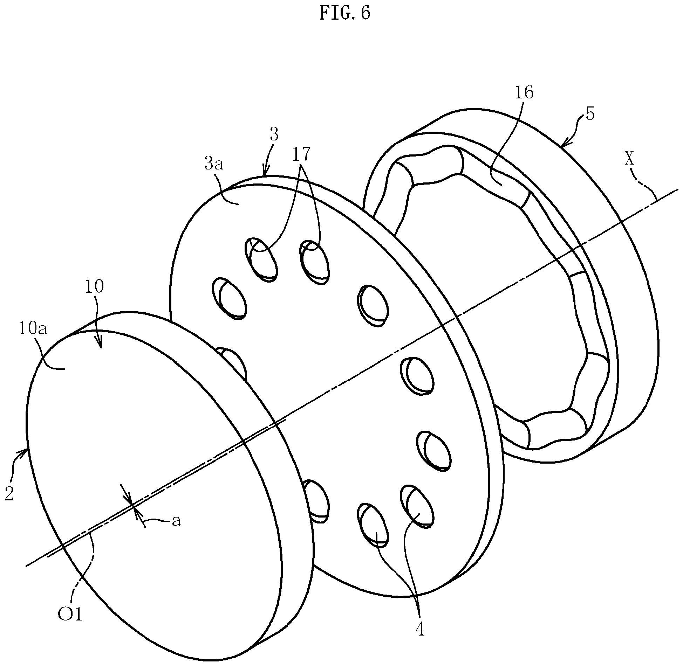

As shown in FIG. 6, the input rotating part 2 and the output rotating part 3 have the common rotation center X, and an axial center of the fixed member 5 is disposed on the rotation center X. The curvature center O1 of the raceway center line L 1 of the first rolling element engaging groove 13 formed in the input member 10 is eccentric with respect to the rotation center X by the eccentric amount "a". Each ball 4 disposed in each pocket 17 of the output rotating part 3 protrudes from each pocket 17 to the input side (left in the drawing) and the output side (right side in the drawing), and this protruding part engages with the first rolling element engaging groove 13 of the input member 10 and the second rolling element engaging groove 16 of the fixed member 5. In FIG. 6, each member is schematically shown. For example, the pockets 17 are represented by elongated holes that are not opened on the outer peripheral surface of the disk part 3a of the output rotating part 3.

In the speed reducer 1 according to the present embodiment, the number of peaks of the raceway center line L2 of the second rolling element engaging groove 16 is ten (the number of valleys is also ten), and the number of balls 4 is eleven. Thus, a reduction ratio i obtained by the following equation is 1/11.

$$\text{Reduction ratio } i = (\text{number of balls - number of peaks})/\text{number of balls}$$

The number of peaks is the number of balls $\pm$ 1. This means that when the reduction ratio i is a negative value, the rotation direction of the output rotating part 3 is opposite to the rotation direction of the input rotating part 2.

A shape of the raceway center line L2 of the second rolling element engaging groove 16 is set such that a decelerated rotational motion is transmitted from the input rotating part 2 to the output rotating part 3 in synchronous rotation. Specifically, where the reduction ratio of the speed reducer 1 is i, a shape of the second rolling element engaging groove 16 is set such that the balls 4 engaging with the first rolling element engaging groove 13 engage with the second rolling element engaging groove 16 with the input shaft 7 at a rotation angle $\theta$ and the output rotating part 3 at a rotation angle $i\theta$ to transmit torque. That is, the shape of the second rolling element engaging groove 16 is set such that the distance R between the rotation center X of the input rotating part 2 and the output rotating part 3 and the raceway center line L2 of the second rolling element engaging groove 16 satisfies the following equation (1).

$$R = a \cdot \cos(\varphi/i) + \sqrt{\{r2 - (a \cdot \sin(\psi/i))2\}} \cdots (1)$$

where

R: distance between the rotation center X and the raceway center line L2 of the second rolling element engaging groove 16
a: eccentric amount of the center O1 of the raceway center line L1 of the first rolling element engaging groove 13 with respect to the rotation center X
i: reduction ratio
$\psi$: rotation angle of the output rotating part 3
r: radius of the raceway center line L1 of the first rolling element engaging groove 13.

Of the input member 10, the output member (the disk part 3a of the output rotating part 3), and the fixed member 5, at least a side wall of the first rolling element engaging groove 13, a side wall of the second rolling element engaging groove 16, or the peripheral wall of each pocket 17 that contact each ball 4 are preferably provided with surface hardness equivalent to surface hardness of the surface of each ball 4 in order to reduce friction with each ball 4 due to a difference in the surface hardness. For example, the surface hardness of the side wall of the first rolling element engaging groove 13, the side wall of the second rolling element engaging groove 16, and the peripheral wall of each pocket 17 is preferably within a range of HRC50 to HRC60. Specifically, the input member 10, the output member, and the fixed member 5 are formed by using carbon steel for machine structure such as S45C and S50C or alloy steel for machine structure such as SCM415 and SCM420, and then are subjected to a total heat treatment or a carburizing heat treatment to obtain the above surface hardness. Alternatively, the above surface hardness can also be obtained by forming each of the above members using a bearing steel such as SUJ2 and performing a total heat treatment or a high frequency heat treatment on the members.

Next, operations of the speed reducer 1 according to the present embodiment will be summarized and described. In response to a rotation of the input shaft 7 of the input rotating part 2 shown in FIG. 1, the input member 10 revolves around the rotation center X with a whirl radius "a". At that time, the input member 10, which is rotatable with respect to the eccentric cam 8 provided on the input shaft 7, hardly rotates. This reduces a relative friction amount between the first rolling element engaging groove 13 and the balls 4 and improves the transmission efficiency of the rotational torque.

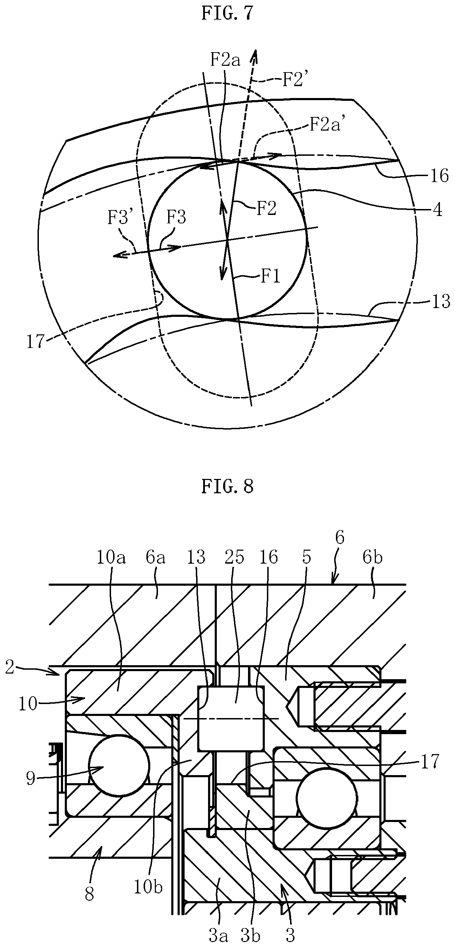

In response to the revolution of the input member 10, each ball 4 that engages with the circular first rolling element engaging groove 13 moves along the second rolling element engaging groove 16 formed in the fixed member 5. Specifically, when the center line O1 of the input member 10 revolves in a direction of an arrow from a position shown in FIG. 4, the first rolling element engaging groove 13 formed in the input member 10 engages with the balls 4 as shown in FIG. 7, and a substantially upward contact force F1 acts on the balls 4. By the engagement of the balls 4 with the second rolling element engaging groove 16, a contact force F2' with the balls 4 acts on the second rolling element engaging groove 16, and at the same time, a contact force F2 due to a contact with the second rolling element engaging groove 16 acts on the balls 4. A circumferential direction component F2a of the contact force F2 causes the balls 4 to move in the circumferential direction along the second rolling element engaging groove 16. The balls 4 engage with the pockets 17 of the output rotating part 3 in the circumferential direction, and a contact force F3' generated by this engagement acts as a force to rotate the output rotating part 3 in the same direction as the input shaft 7 (see FIG. 4).

The force to rotate the output rotating part 3 (that is, the contact force F3' acting on the pockets 17 of the output rotating part 3 from the balls 4 ≈ the circumferential direction component F2a of the contact force F2 that the balls 4 receive from the second rolling element engaging groove 16) changes depending on a contact state between the balls 4 and the second rolling element engaging groove 16 having a corrugated shape, and therefore has a different magnitude depending on the position of each ball 4 (see FIG. 4). The balls 4 are disposed around the rotation center X of the input rotating part 2 and the output rotating part 3. Thus, the force to rotate the output rotating part 3 is distributed around the rotation center X. Specifically, the balls 4 located at both upper and lower ends in the drawing and contacting near a center between a top of each peak and a top of each valley of the second rolling element engaging groove 16 having a corrugated shape (a part having a larger inclined angle with respect to the pitch circle centered on the rotation center X) have a larger force to rotate the output rotating part 3. The balls 4 located at both left and right ends in the drawing and contacting near the top of each peak or the top of each valley of the second rolling element engaging groove 16 having a corrugated shape (a part having a smaller inclined angle with respect to the pitch circle centered on the rotation center X) have a smaller force to rotate the output rotating part 3.

In the speed reducer 1, the contact force F2' between each ball 4 and the second rolling element engaging groove 16 is supported by the fixed member 5 fixed to the housing 6, and this eliminates the need for large bearings supporting the contact force F2'. Further, the balls 4 engage with the pockets 17 in the rotational direction while reciprocating in the radial direction, and thus only the contact force F3' in the rotational direction is applied from the balls 4 to the output rotating part 3. In this way, limiting a direction of the contact force F3' to the rotation direction makes it possible to miniaturize the bearings 12 and 14 supporting the output rotating part 3, miniaturize the speed reducer 1, reduce the torque loss inside the bearings, and improve the torque transmission efficiency of the speed reducer 1.

As described above, during torque transmission, the contact force F3' in the circumferential direction due to contact with the balls 4 is applied to pillars provided between the pockets 17 in the disk part 3a of the output rotating part 3. Therefore, there is a concern that the pillars provided between the pockets 17 of the disk part 3a may be damaged by the contact force F3' received from the balls 4. In particular, if the number of pockets 17 (that is, the number of balls 4) is increased in order to increase the reduction ratio, a circumferential width of each pillar between the pockets 17 becomes narrower, and thus there is more concern that the pillars may be damaged by the contact force F3' due to the contact with the balls 4.

In this regard, in the present embodiment, as shown in FIG. 4, the contact force F3' with the pocket 17 acts not only on the balls 4 above the rotation center X but also on the balls 4 below the rotation center X and contributes to the torque transmission. Therefore, as compared with a case where torque is transmitted only by the balls 4 above the rotation center X, for example, the contact force F3' applied from each ball 4 to the disk part 3a is dispersed, and thus a load applied to each pillar of the disk part 3a is reduced. Further, in the present embodiment, as described above, the surface hardness of the peripheral wall of the pocket 17 is increased to HRC50 or more by selection of the material of the disk part 3a and the heat treatment. This can enhance the durability of the pillars between the pockets 17 of the disk part 3a of the output rotating part 3, or enhance the load capacity while maintaining the durability of the pillars.

In this way, the rotation input to the input shaft 7 of the input rotating part 2 is transmitted to the output rotating part 3 via the balls 4. At that time, when the raceway center line L2 of the second rolling element engaging groove 16 is designed such that the distance R between the rotation center X of the input rotating part 2 and the output rotating part 3 and the raceway center line L2 of the second rolling element engaging groove 16 satisfies the above equation (1), the output rotating part 3 always rotates synchronously about the input shaft 7 at a reduced rotation speed.

The embodiment of the present invention is not limited to the above. Hereinafter, other embodiments of the present invention will be described, but points similar to those of the above embodiments will not be repeated.

In the embodiment shown in FIG. 8, a roller 25 having a cylindrical outer peripheral surface is used as a rolling element that engages with the rolling element engaging grooves 13 and 16. In the illustrated example, a cylindrical roller is used as the roller 25. In response to a rotation of the input shaft 7, the rotation is transmitted to the output rotating part 3 via the roller 25 while the outer peripheral surface of the roller 25 is in contact with the side wall on the outer diameter side or the inner diameter side of the rolling element engaging grooves 13 and 16. Both end surfaces in the axial direction of the roller 25 and bottom surfaces of the rolling element engaging grooves 13 and 16 may be in contact with each other, or may have an axial gap therebetween.

In the present embodiment, the direction of the contact force generated between the outer peripheral surface of the roller 25 and the rolling element engaging grooves 13 and 16 is a direction orthogonal to the axial direction. As a result, the direction of the load applied to the bearing 9 supporting the input member 10 and the bearings 11 and 12 supporting the input shaft 7 (see FIG. 1) is limited. Thus, compared to a case where a load is applied in both radial and axial directions, the bearing can be miniaturized while maintaining durability, and the speed reducer 1 as a whole can be further miniaturized. Further, by limiting the load applied to the bearings 9, 11, and 12 in the radial direction, the torque loss inside these bearings is reduced, and thus the transmission efficiency of the rotational torque is further improved.

The roller 25 is not limited to a cylindrical roller, and for example, a barrel-shaped roller having a slightly larger diameter at a center of the outer peripheral surface in the axial direction or a tapered roller having a tapered outer peripheral surface may be used. In these cases, a slight axial load is applied to the input rotating part 2 via the roller 25, but the load is smaller than when the balls are used as the rolling elements, thereby obtaining the effect of miniaturizing the bearing supporting the input rotating part 2.

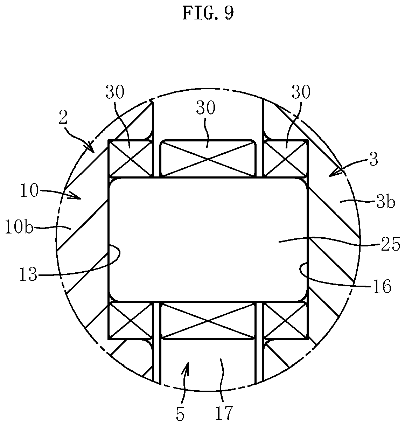

When the roller 25 is used as the rolling element as described above, as shown in FIG. 9, a friction reducing member 30 may be provided at contact parts between the outer peripheral surface of the roller 25 and the first rolling element engaging groove 13, the second rolling element engaging groove 16, and the pocket 17. As the friction reducing member 30, for example, a needle bearing or a slide bearing (for example, a sintered oil-impregnated bearing) can be used. In this way, the roller 25 contacts the first rolling element engaging groove 13, the second rolling element engaging groove 16, and the pocket 17 via the friction reducing member 30. This significantly reduces a friction loss at each contact part, and thus improves the torque transmission efficiency.

As described above, it is the most effective that the friction reducing member 30 (needle bearing or slide bearing) is provided with the contact parts between the roller 25 and all three components of the first rolling element engaging groove 13, the second rolling element engaging groove 16, and the pockets 17. However, the effect of improving the torque transmission efficiency due to the reduction of friction loss can be obtained when the friction reducing member 30 is provided at the contact part between the roller 25 and at least one of the above three components. In particular, when the friction reducing member 30 is provided at the contact part between the roller 25 and at least two of the above three components, the contact with the remaining one component becomes a rolling contact, thereby increasing the effect of the improvement of the torque transmission efficiency.

Further, in the above embodiment, the case is shown where the first rolling element engaging groove 13 is continuous all around. However, the present invention is not limited thereto, and the first rolling element engaging groove 13 may be, for example, a plurality (for example, the same number as the rolling elements) of arc-shaped grooves formed along a circle centered on the center line O1.

Further, in the above embodiment, the input member 10 is rotatable with respect to the eccentric cam 8 provided on the input shaft 7, but the input member 10 and the input shaft 7 may be integrally rotated. Further, in the above embodiment, a configuration is illustrated in which the separate eccentric cam 8 is fitted to the input shaft 7. However, the present invention is not limited thereto, and the input shaft 7 and the eccentric cam 8 may be integrated. Further, in the above embodiment, the disk part 3a of the output rotating part 3, the cylindrical part 3b1 of the shaft part 3b, and the lid 3b2 are formed separately for the convenience of manufacturing. However, the present invention is not limited thereto, and the disk part 3a and the cylindrical part 3b1 of the shaft part 3b may be integrated.

In the above embodiment, a case is illustrated where the present invention is applied to the speed reducer 1 having the reduction ratio i of 1/11. However, the present invention is not limited thereto, and suitably applicable to, for example, a speed reducer having any reduction ratio within a range of 1/5 to 1/50. In this case, it is sufficient that the number of peaks/valleys of the corrugated curve of the raceway center line of the rolling element engaging groove and the number of pockets of the fixed member and rollers are appropriately set in accordance with the reduction ratio i.

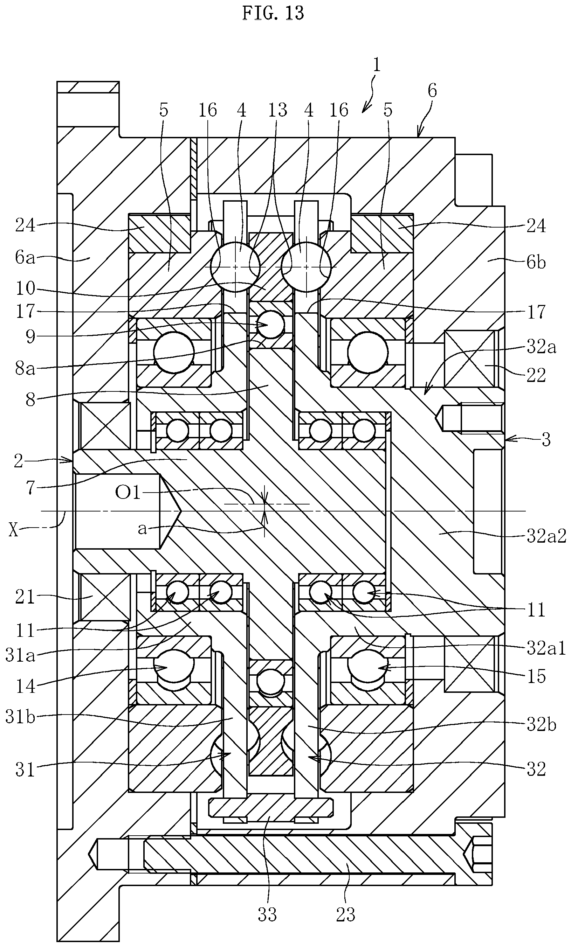

Hereinafter, a second embodiment of the present invention will be described with reference to FIGS. 13 to 20.

As shown in FIG. 13, the speed reducer 1 as a power transmission device according to one embodiment of the present invention includes the input rotating part 2, the output rotating part 3, the balls 4 as rolling elements, the fixed member 5, and the housing 6 that houses all of the above. In the illustrated example, the housing 6 is configured by a first housing member 6a provided on the input side (left in FIG. 13) and a second housing member 6b provided on the output side (right in FIG. 13). Both of the housing members 6a and 6b are fixed by appropriate means such as the bolts 23. The input rotating part 2 and the output rotating part 3 are disposed coaxially and have a common rotation center X. The fixed member 5 is fixed to the housing 6.

The input rotating part 2 has the input shaft 7, the eccentric cam 8, the rolling bearing 9, and the input member 10. The input shaft 7 is rotatable around the rotation center X with respect to the housing 6. In the present embodiment, the input shaft 7 is rotatably supported with respect to the housing 6 by a plurality of the rolling bearings 11 mounted between the input shaft 7 and the inner peripheral surface of the output rotating part 3. In the illustrated example, two bearings 11 are respectively provided on both sides of the eccentric cam 8 in the axial direction. A seal member 21 is provided between an outer peripheral surface of the input shaft 7 and the inner peripheral surface of the first housing member 6a to prevent grease or oil filled in the housing 6 from leaking out. The eccentric cam 8 is provided on an outer periphery of the input shaft 7, and is provided integrally with the input shaft 7 in the illustrated example. The center line O1 of the cylindrical outer peripheral surface 8a of the eccentric cam 8 is eccentric in the radial direction by the eccentric amount "a" with respect to the rotation center X. The input member 10 has a substantially disk shape, and the center line of the input member 10 coincides with the center line O1 of the cylindrical outer peripheral surface 8a of the eccentric cam 8. The rolling bearing 9 is mounted between the cylindrical outer peripheral surface 8a of the eccentric cam 8 and the inner peripheral surface of the input member 10. As a result, the input member 10 is relatively rotatable with respect to the eccentric cam 8.

The fixed members 5 are provided on both sides of the input member 10 in the axial direction. The fixed members 5 have an annular shape, and in the illustrated example, both fixed members 5 include an identical material and have an identical shape. The fixed members 5 are fixed to the housing 6 by an appropriate means. In the illustrated example, a regulating member 24 that regulates a circumferential movement of each fixed member 5 with respect to the housing 6 is provided. The regulating member 24 is mounted on a key groove provided on the inner peripheral surface of each of the housing members 6a and 6b and the outer peripheral surface of each fixed member 5, and engages with the key groove in the circumferential direction to regulate the movement of each fixed member 5 with respect to the housing 6 in the circumferential direction.

The input member 10 and each fixed member 5 are disposed side by side in the axial direction at predetermined intervals. The first rolling element engaging groove 13 is formed on each of the side surfaces of the input member 10 in the axial direction. The second rolling element engaging groove 16 that axially opposes the first rolling element engaging groove 13 is formed in each fixed member 5. That is, in the present embodiment, the first member having the first rolling element engaging groove 13 is provided in the input rotating part 2 as the input member 10, and the second member having the second rolling element engaging groove 16 is the fixed members 5.

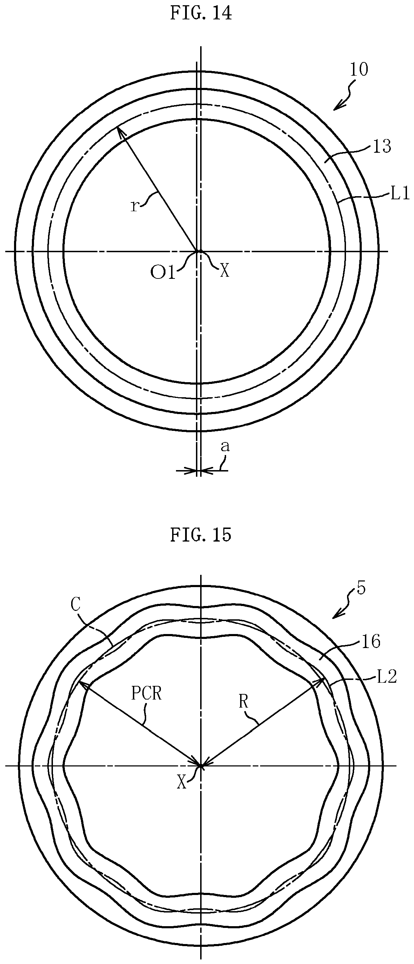

As shown in FIG. 14, a raceway center line L1 of the first rolling element engaging groove 13 formed in the input member 10 is formed in a circle having the radius r. The curvature center of the raceway center line L1 of the first rolling element engaging groove 13 coincides with the cylindrical outer peripheral surface 8a of the eccentric cam 8 and the center line O1 of the input member 10. That is, the curvature center of the raceway center line L1 (that is, the center line O1) is eccentric with respect to the rotation center X of the input rotating part 2 by the eccentric amount "a". By engaging with the first rolling element engaging groove 13, each ball 4 is held at a predetermined radial position while being movable in the circumferential direction (direction along the raceway center line L1). The raceway center line L1 of the first rolling element engaging groove 13 refers to a track of a center of each ball 4 when the balls 4 are moved along the first rolling element engaging groove 13.

As shown in FIG. 15, the raceway center line L2 of the second rolling element engaging groove 16 formed in each fixed member 5 is formed in a corrugated curve alternately intersecting with the reference pitch circle C having a curvature center on the rotation center X at a constant pitch. That is, the second rolling element engaging groove 16 is formed in a corrugated curve in which a distance R from the rotation center X fluctuates with respect to a reference pitch circle radius PCR. In the present embodiment, the corrugated curve of the raceway center line L2 is provided with ten peaks whose distance R from the rotation center X is larger than the reference pitch circle radius PCR, and ten valleys whose distance R from the rotation center X is smaller than the reference pitch circle radius PCR. The second rolling element engaging grooves 16 formed in both fixed members 5 have the same shape and are disposed so as to have the same phase. The raceway center line of the second rolling element engaging groove 16 refers to the track of the center of each ball 4 when the balls 4 are moved along the second rolling element engaging groove 16.

As shown in FIG. 13, the output rotating part 3 has a first output member 31 provided on one side (left in the drawing) of the input member 10 in the axial direction, a second output member 32 provided on the other side (right in the drawing) of the input member 10 in the axial direction, and a connecting member 33 connecting the first output member 31 and the second output member 32. The first output member 31 has a cylindrical shaft part 31a and a disk part 31b extending from the shaft part 31a toward the outer diameter. The second output member 32 has a shaft part 32a that functions as an output shaft, and a disk part 32b that extends from the shaft part 32a toward the outer diameter. The shaft part 32a of the second output member 32 has a cylindrical part 32a1 and a lid 32a2 that closes an opening of the cylindrical part 32a1. The lid 32a2 is provided with a connecting part connecting other members to which the decelerated rotation is to be transmitted. In the illustrated example, the shaft part 31a and the disk part 31b of the first output member 31 are integrally molded, and the shaft part 32a and the disk part 32b of the second output member 32 are integrally molded.

The output rotating part 3 is rotatable around the rotation center X with respect to the housing 6. In the present embodiment, an outer diameter end of the disk part 31b of the first output member 31 and an outer diameter end of the disk part 32b of the second output member 32 are connected by the connecting member 33, whereby the output members 31 and 32 are integrally rotatable. Specifically, the output rotating part 3 is integrally rotatably supported with respect to the housing 6 by the rolling bearing 14 mounted between an outer peripheral surface of the shaft part 31a of the first output member 31 and the inner peripheral surface of each fixed member 5 on one side in the axial direction, and a rolling bearing 15 mounted between an outer peripheral surface of the shaft part 32a of the second output member 32 and an inner peripheral surface of each fixed member 5 on the other side the axial direction. A seal member 22 is provided between an outer peripheral surface of the shaft part 32a of the second output member 32 and the inner peripheral surface of the second housing member 6b to prevent grease or oil filled in the housing 6 from leaking out.

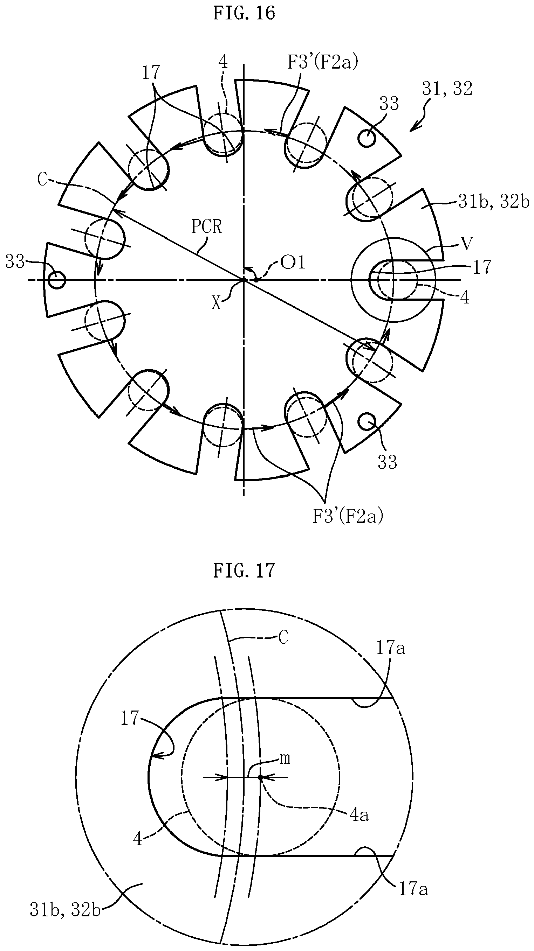

The plurality of pockets 17 holding the balls 4 is formed in the disk part 31b of the first output member 31 and the disk part 32b of the second output member 32, respectively. That is, in the present embodiment, a pair of third members having the pockets 17 is provided in the output rotating part 3 as the output members 31 and 32. As shown in FIG. 16, the pockets 17 are formed by elongated holes extending radially around the rotation center X of the rotating members 10 and 20. In the illustrated example, each pocket 17 is opened on outer peripheral surfaces of the disk parts 31b and 32b. The pockets 17 are formed on the same circumference at equal intervals in the circumferential direction. In the present embodiment, the pockets 17 provided on the output members 31 and 32 are provided at the same positions in a plane orthogonal to the axial direction, and one ball 4 is disposed in each pocket 17. The number of pockets 17 formed in the output members 31 and 32 (that is, the number of balls 4 disposed between the output members 31 and 32 and the input member 10) is 11, which is one more than the number of the peaks or valleys (ten) of the corrugated curve of the raceway center line L2.

As shown in FIG. 17, each ball 4 can move within each pocket 17 within a range of a predetermined amount m in the radial direction around the reference pitch circle C. In the present embodiment, a pair of parallel flat surfaces 17a facing each other in the circumferential direction is provided on a peripheral wall of each pocket 17, and a circumferential distance between the flat surfaces 17a is substantially equal to (slightly larger than) an outer diameter of each ball 4. As a result, each ball 4 is held in a predetermined circumferential position by each pocket 17 while being movable in the radial direction.

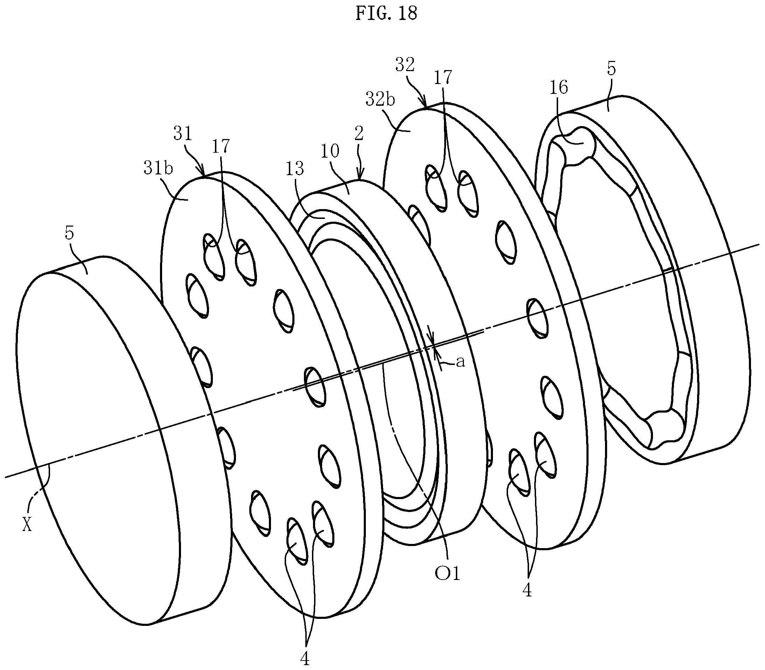

As shown in FIG. 18, the input member 10 and the output members 31 and 32 have the common rotation center X, and the axial centers of both of the fixed members 5 are disposed on the rotation center X. The central axis O1 of the input member 10 (that is, the curvature center of the raceway center line L1 of the first rolling element engaging groove 13) is eccentric with respect to the rotation center X by the eccentric amount "a". The balls 4 disposed in the pockets 17 of the output members 31 and 32 protrude from the pockets 17 toward both sides in the axial direction, and these protruding parts engage with the first rolling element engaging groove 13 of the input member 10 and the second rolling element engaging groove 16 of each fixed member 5 (see FIG. 13). In FIG. 18, each member is schematically shown. For example, the pockets 17 are represented by elongated holes that are not opened on outer peripheral surfaces of the output members 31 and 32.

In the speed reducer 1 according to the present embodiment, the number of peaks of the raceway center line L2 of the second rolling element engaging groove 16 is ten (the number of valleys is also ten), and the number of balls 4 is eleven. Thus, a reduction ratio i obtained by the following equation is 1/11.

$$\text{Reduction ratio } i = (\text{number of balls} - \text{number of peaks})/\text{number of balls}$$

The number of peaks is the number of balls $\pm$ 1. This means that when the reduction ratio i is a negative value, the rotation direction of the output rotating part 3 is opposite to the rotation direction of the input rotating part 2.

A shape of the raceway center line L2 of the second rolling element engaging groove 16 is set such that a decelerated rotational motion is transmitted from the input rotating part 2 to the output rotating part 3 in synchronous rotation. Specifically, where the reduction ratio of the speed reducer 1 is i, a shape of the second rolling element engaging groove 16 is set such that the balls 4 engaging with the first rolling element engaging groove 13 engage with the second rolling element engaging groove 16 with the input shaft 7 at a rotation angle $\theta$ and the output rotating part 3 at a rotation angle $i\theta$ to transmit torque. That is, the shape of the second rolling element engaging groove 16 is set such that the distance R between the rotation center X of the input rotating part 2 and the output rotating part 3 and the raceway center line L2 of the second rolling element engaging groove 16 satisfies the following equation (1).

$$R = a\cdot\cos(\varphi/i) + \sqrt{r2 - (a\cdot\sin(\psi/i))2}\cdots(1)$$

where

R: distance between the rotation center X and the raceway center line L2 of the second rolling element engaging groove 16

a: eccentric amount of the center O1 of the raceway center line L1 of the first rolling element engaging groove 13 with respect to the rotation center X

i: reduction ratio

$\psi$: rotation angle of the output rotating part 3

r: radius of the raceway center line L1 of the first rolling element engaging groove 13.

Of the input member 10, both of the output members 31 and 32, and both of the fixed members 5, at least the side wall of the first rolling element engaging groove 13, the side wall of the second rolling element engaging groove 16, or the peripheral wall of each pocket 17 that contact each ball 4 are preferably provided with surface hardness equivalent to the surface hardness of the surface of each ball 4 in order to reduce friction with the balls 4 due to a difference in the surface hardness. For example, the surface hardness of the side wall of the first rolling element engaging groove 13, the side wall of the second rolling element engaging groove 16, and the peripheral wall of each pocket 17 is preferably within a range of HRC50 to HRC60. Specifically, the input member 10, the output members 31 and 32, and the fixed members 5 are formed by using carbon steel for machine structure such as S45C and S50C or alloy steel for machine structure such as SCM415 and SCM420, and then are subjected to a total heat treatment or a carburizing heat treatment to obtain the above surface hardness. Alternatively, the above surface hardness can also be obtained by forming each of the above members using a bearing steel such as SUJ2 and performing a total heat treatment or a high frequency heat treatment on the members.

Next, operations of the speed reducer 1 according to the present embodiment will be summarized and described. In response to a rotation of the input shaft 7 of the input rotating part 2 shown in FIG. 13, the input member 10 revolves around the rotation center X with a whirl radius "a". At that time, the input member 10, which is rotatable with respect to the eccentric cam 8 provided on the input shaft 7, hardly rotates. This reduces a relative friction amount between the first rolling element engaging groove 13 and the balls 4 and improves the transmission efficiency of the rotational torque.

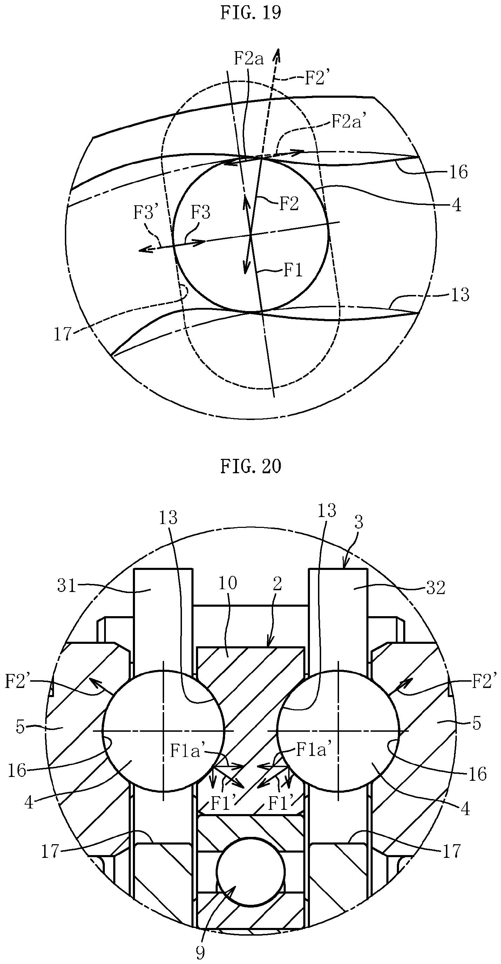

In response to the revolution of the input member 10, each ball 4 that engages with the circular first rolling element engaging groove 13 moves along the second rolling element engaging groove 16 formed in the fixed members. Specifically, when the center line O1 of the input member 10 revolves in the direction of the arrow from the position shown in FIG. 16, the first rolling element engaging groove 13 formed in the input member 10 engages with each ball 4 as shown in FIG. 19, and the substantially upward contact force F1 acts on each ball 4. By the engagement of the balls 4 with the second rolling element engaging groove 16, a contact force F2' with the balls 4 acts on the second rolling element engaging groove 16, and at the same time, a contact force F2 due to a contact with the second rolling element engaging groove 16 acts on the balls 4. A circumferential direction component F2a of the contact force F2 causes the balls 4 to move in the circumferential direction along the second rolling element engaging groove 16. The balls 4 engage with the pockets 17 of the output rotating part 3 in the circumferential direction, and a contact force F3' generated by this engagement acts as a force to rotate the output rotating part 3 in the same direction as the input shaft 7 (see FIG. 16).

The force to rotate the output rotating part 3 (that is, the contact force F3' acting on the pockets 17 of the output members 31 and 32 from the balls 4 ≈ the circumferential direction component F2a of the contact force F2 that the balls 4 receive from the second rolling element engaging groove 16) changes depending on a contact state between the balls 4 and the second rolling element engaging groove 16 having a corrugated shape, and therefore has a different magnitude depending on the position of each ball 4 (see FIG. 16). The balls 4 are disposed around the rotation center X of the input rotating part 2 and the output rotating part 3. Thus, the force to rotate the output rotating part 3 is distributed around the rotation center X. Specifically, the balls 4 located at both upper and lower ends in the drawing and contacting near a center between a top of each peak and a top of each valley of the second rolling element engaging groove 16 having a corrugated shape (a part having a larger inclined angle with respect to the pitch circle centered on the rotation center X) have a larger force to rotate the output rotating part 3. The balls 4 located at both left and right ends in the drawing and contacting near the top of each peak or the top of each valley of the second rolling element engaging groove 16 having a corrugated shape (a part having a smaller inclined angle with respect to the pitch circle centered on the rotation center X) have a smaller force to rotate the output rotating part 3.

In the speed reducer 1, a pair of the fixed members 5, a pair of the output members 31 and 32, and the plurality of balls 4 are disposed symmetrically in the axial direction around the input member 10. As a result, as shown in FIG. 20, the input member 10 receives the contact forces F1' from the balls 4 provided on both sides in the axial direction, and axial components F1a' of the contact forces F1' are canceled out. As a result, the load in the axial direction is not transmitted to the bearing 9 supporting the input member 10 and the bearing 11 supporting the input shaft 7 (see FIG. 13). This can miniaturize the bearings 9 and 11, and the speed reducer 1. Further, by limiting the direction of the load applied to the bearings 9 and 11, the torque loss inside the bearings is reduced and the torque transmission efficiency of the speed reducer 1 is improved.

Further, in the speed reducer 1, the contact force F2' between each ball 4 and the second rolling element engaging groove 16 is supported by each fixed member 5 fixed to the housing 6, and this eliminates the need for large bearings supporting the contact force F2'. Further, the balls 4 engage with the pockets 17 in the rotational direction while reciprocating in the radial direction, and thus only the contact force F3' in the rotational direction is applied from the balls 4 to the output rotating part 3. In this way, limiting a direction of the contact force F3' to the rotation direction makes it possible to miniaturize the bearings 14 and 15 supporting the output rotating part 3, miniaturize the speed reducer 1, reduce the torque loss inside the bearings, and improve the torque transmission efficiency of the speed reducer 1.

As described above, during torque transmission, the contact force F3' in the circumferential direction due to contact with the balls 4 is applied to the pillars provided between the pockets 17 of the disk parts 31b and 32b of the output members 31 and 32. Therefore, there is a concern that the pillars provided between the pockets 17 of the disk parts 31b and 32b may be damaged by the contact force F3' received from the balls 4. In particular, if the number of pockets 17 (that is, the number of balls 4) is increased in order to increase the reduction ratio, a circumferential width of each pillar between the pockets 17 becomes narrower, and thus there is more concern that the pillars may be damaged by the contact force F3' due to the contact with the balls 4.

In this regard, in the present embodiment, as shown in FIG. 16, the contact force F3' with the pocket 17 acts not only on the balls 4 above the rotation center X but also on the balls 4 below the rotation center X and contributes to the torque transmission. Therefore, as compared with a case where torque is transmitted only by the balls 4 above the rotation center X, for example, the contact force F3' applied from each ball 4 to the disk parts 31b and 32b is dispersed, and thus a load applied to each pillar of the disk parts 31b and 32b is reduced. In particular, in the present embodiment, by providing the output members 31 and 32 on both sides of the input member 10, contact points between the balls 4 and the output members 31 and 32 increase, thereby further reducing the load at each of the contact points. Furthermore, in the present embodiment, as described above, the surface hardness of the peripheral wall of each pocket 17 is increased to HRC50 or more by selection of the material of the disk parts 31b and 32b and the heat treatment. This can enhance the durability of the pillars between the pockets 17 of the output members 31 and 32, or enhance the load capacity while maintaining the durability of the pillars.

In this way, the rotation input to the input shaft 7 of the input rotating part 2 is transmitted to the output rotating part 3 via the balls 4. At that time, when the raceway center line L2 of the second rolling element engaging groove 16 is designed such that the distance R between the rotation center X of the input rotating part 2 and the output rotating part 3 and the raceway center line L2 of the second rolling element engaging groove 16 satisfies the above equation (1), the output rotating part 3 always rotates synchronously about the input shaft 7 at a reduced rotation speed.

The embodiment of the present invention is not limited to the above. Hereinafter, other embodiments of the present invention will be described, but points similar to those of the above embodiments will not be repeated.

In the above embodiment, the case is shown where the first rolling element engaging groove 13 having a circular shape is continuous all around. However, the present invention is not limited thereto, and the first rolling element engaging groove 13 may be, for example, a plurality (for example, the same number as the rolling elements) of arc-shaped grooves formed along the raceway center line L1 having a circular shape.

Further, in the above embodiment, the input member 10 is rotatable with respect to the input shaft 7, but the input member 10 and the input shaft 7 may be integrally rotated. In the above embodiment, the configuration is illustrated in which the input shaft 7 and the eccentric cam part 8 are integrally formed. However, the present invention is not limited thereto. The input shaft 7 and the eccentric cam 8 may be formed separately, and the eccentric cam part 8 may be fixed to the outer peripheral surface of the input shaft 7.

In the above embodiment, the shaft part 31a and the disk part 3 1b of the first output member 31 are integrally formed, and the shaft part 32a and the disk part 32b of the second output member 32 are integrally formed. However, these members may be separately formed. By forming the first output member 31 and the second output member 32 with an identical material and in an identical shape, the manufacturing cost can be reduced.

In the above embodiment, the case is shown where the first output member 31 and the second output member 32 are connected by the connecting member 33. However, the present invention is not limited thereto. For example, the output members 31 and 32 may be integrally formed, or may be integrated by welding. The output members 31 and 32 do not have to be connected, and may be independently rotatable.

In the above embodiment, the case is illustrated where the present invention is applied to the speed reducer 1 having the reduction ratio i of 1/11. However, the present invention is not limited thereto, and suitably applicable to, for example, a speed reducer having any reduction ratio within a range of 1/5 to 1/50. In this case, it is sufficient that the number of peaks/valleys of the corrugated curve of the raceway center line of the rolling element engaging groove and the number of pockets of the fixed member and rollers are appropriately set in accordance with the reduction ratio i.

Further, in the above embodiment, a case is shown where the first member having the first rolling element engaging groove 13 is the input member 10, the second member having the second rolling element engaging groove 16 is the fixed member 5, and the third members having the pockets 17 are the output members 31 and 32. However, the present invention is not limited thereto. By appropriately assigning the first member, the second member, and the third members to the input rotating part, the fixed member, and the output rotating part depending on specifications required by a user, usage environment, or the like, a power transmission form can be changed as needed.

REFERENCE SIGNS LIST

1        Speed reducer
2        Input rotating part
3        Output rotating part

3a          Disk part (output member)
4           Ball (rolling element)
5           Fixedmember
6           Housing
7           Input shaft
8           Eccentric cam
10          Input member
13          First rolling element engaging groove
16          Second rolling element engaging groove
17          Pocket
25          Roller (rolling element)
30          Friction reducing member
F1, F1'     Contact force between ball and first rolling element engaging groove
F2, F2'     Contact force between ball and second rolling element engaging groove
F3, F3'     Contact force between ball and pocket
L1          Raceway center line of first rolling element engaging groove
L2          Raceway center line of second rolling element engaging groove
O1          Curvature center of raceway center line of first rolling element engaging groove (center line of input member)
X           Rotation center of input rotating part and output rotating part

**Claims**

1.  A speed reducer (1) comprising:

    an input rotating part (2);
    an output rotating part (3) disposed coaxially with the input rotating part (2);
    a fixed member (5);
    a first rolling element engaging groove (13) disposed in the input rotating part (2) and provided along a circle
    having a curvature center (O1) eccentric from a rotation center (X) of the input rotating part (2) and the output
    rotating part (3);
    a second rolling element engaging groove (16) disposed in the fixed member (5) and provided along a corrugated
    curve alternately intersecting a pitch circle (C) having a curvature center on the rotation center (X);
    a plurality of rolling elements (4, 25) engaging with the first rolling element engaging groove (13) and the second
    rolling element engaging groove (16) facing each other in an axial direction; **characterised in that**
    a plurality of pockets (17) are disposed in the output rotating part (3) and holding the plurality of rolling elements
    (4, 25) in a circumferential direction between the first rolling element engaging groove (13) and the second
    rolling element engaging groove (16) in the axial direction,
    wherein the input rotating part (2) comprises:

    an input shaft (7);
    an eccentric cam (8) formed separately from or integrally with the input shaft (7);
    an input member (10) in which the first rolling element engaging groove (13) is formed, the input member
    (10) having a cylindrical part (10a) and a disk part (10b) extending in an inner diameter direction from an
    end of the cylindrical part (10a), and the first and second rolling element engaging grooves (13, 16) are
    formed on axially opposing side surfaces of the input member (10) and the fixed member (5); and
    a rolling bearing (9) mounted between a cylindrical outer peripheral surface (8a) of the eccentric cam (8)
    and an inner peripheral surface of the cylindrical part (10a) of the input member (10).

2.  The speed reducer (1) according to claim 1, wherein the plurality of rolling elements is balls (4).

3.  The speed reducer (1) according to claim 1, wherein the plurality of rolling elements is rollers (25).

4.  The speed reducer (1) according to claim 3, further comprising a friction reducing member (30) provided on at least
    one contact part where an outer peripheral surface of the roller (25) is in contact with the first rolling element engaging
    groove (13), the second rolling element engaging groove (16), or the plurality of pockets (17).

5.  The speed reducer (1) according to claim 4, wherein the friction reducing member (30) is a needle bearing or a slide bearing.

6. A power transmission device (1) comprising:

an input rotating part (2) having a first rolling element engaging groove (13) on each of side surfaces on both sides in an axial direction;

a pair of fixed members (5) provided on the both sides of the input rotating part (2) in the axial direction and each having a second rolling element engaging groove (16);

a plurality of rolling elements (4) provided between the input rotating part (2) and the pair of fixed members (5) in the axial direction and engaging with the first rolling element engaging groove (13) and the second rolling element engaging groove (16) facing each other in the axial direction; and

a pair of output members (31, 32) provided between the input rotating part (2) and the pair of fixed members (5) in the axial direction and having a plurality of pockets (17) holding the plurality of rolling elements (4) in a circumferential direction,

wherein one of the first rolling element engaging groove (13) or the second rolling element engaging groove (16) is disposed along a circle having a curvature center (O1) eccentric from a rotation center (X) of the input rotating part (2) and the output members (31, 32), and

another of the first rolling element engaging groove (13) or the second rolling element engaging groove (16) is disposed along a corrugated curve alternately intersecting a pitch circle (C) having a curvature center on the rotation center (X).

7. The power transmission device (1) according to claim 6, further comprising a bearing (11) rotatably supporting the input rotating part (2).

8. The power transmission device (1) according to claim 6 or 7, wherein the pair of output members (31, 32) is integrally rotatable.

9. The power transmission device (1) according to any one of claims 6 to 8, wherein the pair of fixed members (5) has an identical shape.

10. The power transmission device (1) according to any one of claims 6 to 9, wherein the pair of output members (31, 32) has an identical shape.


**Patentansprüche**

1. Drehzahlminderer (1), umfassend:

einen Eingangs-Drehteil (2);

einen Ausgangs-Drehteil (3), der koaxial zu dem Eingangs-Drehteil (2) angeordnet ist; ein feststehendes Element (5);

eine erste Wälzelement-Eingriffsnut (13), die in dem Eingangs-Drehteil (2) angeordnet ist und entlang eines Kreises bereitgestellt ist, der einen Krümmungsmittelpunkt (O1) aufweist, der exzentrisch bezüglich eines Drehmittelpunkts (X) des Eingangs-Drehteils (2) und des Ausgangs-Drehteils (3) ist;

eine zweite Wälzelement-Eingriffsnut (16), die in dem feststehenden Element (5) angeordnet ist und entlang einer gewellten Kurve bereitgestellt ist, die abwechselnd einen Teilkreis (10) schneidet, der einen Krümmungsmittelpunkt auf dem Drehmittelpunkt (X) aufweist;

eine Vielzahl Wälzelemente (4, 25), die mit der ersten Wälzelement-Eingriffsnut (13) und der zweiten Wälzelement-Eingriffsnut (16), in einer axialen Richtung einander zugewandt, im Eingriff stehen;

**dadurch gekennzeichnet, dass**

eine Vielzahl von Taschen (17) in dem Ausgangs-Drehteil (3) angeordnet sind und die Vielzahl der Wälzelemente (4, 25) in einer Umfangsrichtung zwischen der ersten Wälzelement-Eingriffsnut (13) und der zweiten Wälzelement-Eingriffsnut (16) in der axialen Richtung halten,

wobei der Eingangs-Drehteil (2) umfasst:

eine Eingangswelle (7);

eine exzentrische Kurve (8), die getrennt von oder einstückig mit der Eingangswelle (7) ausgebildet ist;

ein Eingangselement (10), in dem die erste Wälzelement-Eingriffsnut (13) ausgebildet ist, wobei das Eingangselement (10) einen zylindrischen Teil (10a) und einen Scheibenteil (10b) aufweist, der sich in einer Innendurchmesserrichtung von einem Ende des zylindrischen Teils (10a) erstreckt, und die erste und zweite Wälzelement-Eingriffsnut (13, 16) auf axial entgegengesetzten Seitenflächen des Eingangselements (10) und des feststehenden Elements (5) ausgebildet sind; und

ein Wälzlager (9) zwischen einer zylindrischen Außenumfangsfläche (8a) der exzentrischen Kurve (8) und einer Innenumfangsfläche des zylindrischen Teils (10a) des Eingangselements (10) montiert ist.

2. Der Drehzahlminderer (1) noch Anspruch 1, wobei die Vielzahl der Wälzelemente Kugeln (4) sind.

3. Der Drehzahlminderer (1) noch Anspruch 1, wobei die Vielzahl der Wälzelemente Rollen (25) sind.

4. Der Drehzahlminderer (1) noch Anspruch 3, ferner umfassend ein Reibungsverringerungselement (30), das an mindestens einem Kontaktteil bereitgestellt ist, wo sich eine Außenumfangsfläche der Rolle (25) in Kontakt mit der ersten Wälzelement-Eingriffsnut (13), der zweiten Wälzelement-Eingriffsnut (16) oder der Vielzahl der Taschen (17) in Eingriff befindet.

5. Der Drehzahlminderer (1) noch Anspruch 4, wobei das Reibungsverringerungselement (30) ein Nadellager oder ein Gleitlager ist.

6. Leistungsübertragungsvorrichtung (1), umfassend:

einen Eingangs-Drehteil (2), der eine erste Wälzelement-Eingriffsnut (13) an jeder von Seitenflächen auf beiden Seiten in einer axialen Richtung aufweist;

ein Paar feststehender Elemente (5), die auf den beiden Seiten des Eingangs-Drehteils (2) in der axialen Richtung bereitgestellt sind und jeweils eine zweite Wälzelement-Eingriffsnut (16) aufweisen;

eine Vielzahl Wälzelemente (4), die zwischen dem Eingangs-Drehteil (2) und dem Paar der feststehenden Elemente (5) in der axialen Richtung bereitgestellt sind und sich mit der ersten Wälzelement-Eingriffsnut (13) und der zweiten Wälzelement-Eingriffsnut (16), in der axialen Richtung einander zugewandt, im Eingriff befinden; und

ein Paar Ausgangselemente (31, 32), die zwischen dem Eingangs-Drehteil (2) und dem Paar der feststehenden Elemente (5) in der axialen Richtung bereitgestellt sind und eine Vielzahl von Taschen (17) aufweisen, die die Vielzahl der Wälzelemente (4) in einer Umfangsrichtung halten,

wobei eine von der ersten Wälzelement-Eingriffsnut (13) oder der zweiten Wälzelement-Eingriffsnut (16) entlang eines Kreises angeordnet ist, der einen Krümmungsmittelpunkt (O1) aufweist, die exzentrisch bezüglich eines Drehmittelpunkts (X) des Eingangs-Drehteils (2) und des Ausgangselements (31, 32) ist, und

in eine andere von der ersten Wälzelement-Eingriffsnut (13) oder der zweiten Wälzelement-Eingriffsnut (16) entlang einer gewellten Kurve angeordnet ist, die abwechselnd einen Teilkreis (C) schneidet, der einen Krümmungsmittelpunkt auf dem Drehmittelpunkt (X) aufweist.

7. Die Leistungsübertragungsvorrichtung (1) nach Anspruch 6, ferner umfassend ein Lager (11), das den Eingangs-Drehteil (2) drehbar lagert.

8. Die Leistungsübertragungsvorrichtung (1) nach Anspruch 6 oder 7, wobei das Paar der Ausgangselemente (31, 32) einstückig drehbar ist.

9. Die Leistungsübertragungsvorrichtung (1) nach einem der Ansprüche 6 bis 8, wobei das Paar der feststehenden Elemente (5) eine identische Form aufweist.

10. Die Leistungsübertragungsvorrichtung (1) nach einem der Ansprüche 6 bis 9, wobei das Paar der Ausgangselemente (31, 32) eine identische Form aufweist.

**Revendications**

1. Réducteur de vitesse (1) comprenant :

une partie rotative d'entrée (2) ;
une partie rotative de sortie (3) disposée coaxialement à la partie rotative d'entrée (2) ;

un organe fixe (5) ;

une première rainure d'engagement d'élément roulant (13) disposée dans la partie rotative d'entrée (2) et prévue le long d'un cercle ayant un centre de courbure (O1) excentrique par rapport à un centre de rotation (X) de la partie rotative d'entrée (2) et de la partie rotative de sortie (3) ;

une seconde rainure d'engagement d'élément roulant (16) disposée dans l'organe fixe (5) et prévue le long d'une courbe ondulée coupant de façon alternée un cercle primitif (C) ayant un centre de courbure sur le centre de rotation (X) ;

une pluralité d'éléments roulants (4, 25) s'engageant avec la première rainure d'engagement d'élément roulant (13) et la seconde rainure d'engagement d'élément roulant (16) se faisant face dans une direction axiale ;

**caractérisé en ce que**

une pluralité de poches (17) sont disposées dans la partie rotative de sortie (3) et maintenant la pluralité d'éléments roulants (4, 25) dans une direction circonférentielle entre la première rainure d'engagement d'élément roulant (13) et la seconde rainure d'engagement d'élément roulant (16) dans la direction axiale,

dans lequel la partie rotative d'entrée (2) comprend :

un arbre d'entrée (7) ;

une came excentrique (8) formée séparément de l'arbre d'entrée (7) ou d'un seul tenant avec celui-ci ;

un organe d'entrée (10) dans lequel la première rainure d'engagement d'élément roulant (13) est formée, l'organe d'entrée (10) ayant une partie cylindrique (10a) et une partie de disque (10b) s'étendant dans une direction de diamètre interne à partir d'une extrémité de la partie cylindrique (10a), et les première et seconde rainures d'engagement d'élément roulant (13, 16) sont formées sur des surfaces latérales axialement opposées de l'organe d'entrée (10) et de l'organe fixe (5) ; et

un palier à roulements (9) monté entre une surface périphérique externe cylindrique (8a) de la came excentrique (8) et une surface périphérique interne de la partie cylindrique (10a) de l'organe d'entrée (10).

2. Réducteur de vitesse (1) selon la revendication 1, dans lequel la pluralité d'éléments roulants est constituée de billes (4).

3. Réducteur de vitesse (1) selon la revendication 1, dans lequel la pluralité d'éléments roulants est constituée de rouleaux (25).

4. Réducteur de vitesse (1) selon la revendication 3, comprenant en outre un organe de réduction de friction (30) prévu sur au moins une partie de contact où une surface périphérique externe du rouleau (25) est en contact avec la première rainure d'engagement d'élément roulant (13), la seconde rainure d'engagement d'élément roulant (16) ou la pluralité de poches (17).

5. Réducteur de vitesse (1) selon la revendication 4, dans lequel l'organe de réduction de friction (30) est un palier à aiguilles ou un palier lisse.

6. Dispositif de transmission de puissance (1) comprenant :

une partie rotative d'entrée (2) ayant une première rainure d'engagement d'élément roulant (13) sur chacune des surfaces latérales des deux côtés dans une direction axiale ;

une paire d'organes fixes (5) prévus sur les deux côtés de la partie rotative d'entrée (2) dans la direction axiale et ayant chacun une seconde rainure d'engagement d'élément roulant (16) ;

une pluralité d'éléments roulants (4) prévus entre la partie rotative d'entrée (2) et la paire d'organes fixes (5) dans la direction axiale et s'engageant avec la première rainure d'engagement d'élément roulant (13) et la seconde rainure d'engagement d'élément roulant (16) se faisant face dans la direction axiale ; et

une paire d'organes de sortie (31, 32) prévus entre la partie rotative d'entrée (2) et la paire d'organes fixes (5) dans la direction axiale et ayant une pluralité de poches (17) maintenant la pluralité d'éléments roulants (4) dans une direction circonférentielle,

dans lequel l'une de la première rainure d'engagement d'élément roulant (13) ou de la seconde rainure d'engagement d'élément roulant (16) est disposée le long d'un cercle ayant un centre de courbure (O1) excentrique par rapport à un centre de rotation (X) de la partie rotative d'entrée (2) et des organes de sortie (31, 32), et

une autre parmi la première rainure d'engagement d'élément roulant (13) ou la seconde rainure d'engagement d'élément roulant (16) est disposée le long d'une courbe ondulée coupant de façon alternée un cercle primitif (C) ayant un centre de courbure sur le centre de rotation (X).

**7.** Dispositif de transmission de puissance (1) selon la revendication 6, comprenant en outre un palier (11) supportant en rotation la partie rotative d'entrée (2).

**8.** Dispositif de transmission de puissance (1) selon la revendication 6 ou 7, dans lequel la paire d'organes de sortie (31, 32) peuvent tourner d'un seul tenant.

**9.** Dispositif de transmission de puissance (1) selon l'une quelconque des revendications 6 à 8, dans lequel la paire d'organes fixes (5) a une forme identique.

**10.** Dispositif de transmission de puissance (1) selon l'une quelconque des revendications 6 à 9, dans lequel la paire d'organes de sortie (31, 32) a une forme identique.

FIG. 1

FIG. 2

FIG. 3

FIG. 4

FIG. 5

EP 3 859 190 B1

FIG. 6

21

## FIG. 7

## FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8162790 B2

- JP 2018021602 A